Europäisches Patentamt

European Patent Office

Office européen des brevets

(19)

(11) **EP 1 633 057 A1**

(12) **EUROPEAN PATENT APPLICATION**

(43) Date of publication:
**08.03.2006 Bulletin 2006/10**

(51) Int Cl.:
*H04B 1/69* (2006.01)

(21) Application number: **04292160.1**

(22) Date of filing: **02.09.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(71) Applicant: **MOTOROLA INC.**<br>**Schaumburg, IL 60196 (US)**<br><br>(72) Inventors:<br>  • **Buzenac-Settineri, Veronique**<br>    **St Aubin 91193 (FR)**<br>  • **Kamoun, Mohamed**<br>    **St Aubin 91193 (FR)** | • **Bateman, David G.**<br>  **St Aubin 91193 (FR)**<br>• **De Courville, Marc G Bernard**<br>  **St Aubin 91193 (FR)**<br>• **Duhamel, Pierre**<br>  **3 rue Jollot-Curie**<br>  **91190 Gif sur Yvette (FR)**<br><br>(74) Representative: **Cross, Rupert Edward Blount et al**<br>  **BOULT WADE TENNANT,**<br>  **Verulam Gardens**<br>  **70 Gray's Inn Road**<br>  **London WC1X 8BT (GB)** |

(54) **Ultra wide band receiver and coresponding reception method**

(57)    A receiver (103) for receiving an Ultra Wide Band (UWB) signal comprises a receiver front end (105) coupled to symbol point correlators (107). The symbol point correlators (107) comprise a first plurality of correlators which generates correlated signal values around a first symbol decision point of a first symbol by correlating the received UWB signal with a local replica. The first plurality of correlators are time offset with respect to each other to generate first time offset correlated signal values.

The time offsets are typically significantly less than the timing jitter of transmit and receive oscillators. The symbol point correlators (107) are coupled to a joint estimator (109) which determines a symbol value of the first symbol in response to the first time offset correlated signal values by joint detection of the symbol value and a time offset of the UWB signal. The invention may effectively reduce time jitter noise to a value determined by the relative time offset between the correlators.

FIG. 4

EP 1 633 057 A1

## Description

### Field of the invention

The invention relates to a method and receiver for receiving an Ultra Wide Band (UWB) signal and in particular, but not exclusively, to receiving Pulse Position Modulation (PPM) UWB signals or Pulse Amplitude Modulation (PAM) UWB signals.

### Background of the Invention

In recent years, wireless data communication in domestic and enterprise environments have become increasingly commonplace. A new wireless transmission technique known as Ultra Wide Band (UWB) transmission has been proposed. UWB signals are generated by transmitting information in very short data pulses of typically 10-100 picoseconds duration thereby resulting in a bandwidth of the transmitted signal of several Gigahertz. A high data rate may be achieved by a UWB signal and as the bandwidth is exceedingly large, the spectral power density is relatively low. Accordingly, the interference caused to and the sensitivity to narrowband interference from other signals in the frequency range is relatively low thereby allowing a UWB communication system to co-exist with other communication systems in the same frequency range.

UWB transmission schemes thus promise to be advantageous for many domestic and enterprise communication needs.

There is currently an enormous interest in applications for UWB systems for e.g. Wireless Personal Area Networks (WPANs and Wireless Local Area Networks (WLANs). This is mainly due to the promise of ultra high data rates in unlicensed spectrum. UWB solutions are for example currently being standardized by the Institute of Electrical and Electronic Engineers (IEEE) in the technical specifications IEEE802.15.3a and IEEE802.15.4a.

Generally, UWB systems are designed assuming perfect oscillators and ideal synchronisation between the transmitter and the receiver. However, in practice synchronisation is not ideal and timing noise (timing jitter) is typically significant factor in UWB systems. For example practical oscillators generate time jitter which may be a random departure from a deterministic time reference. Time jitter produces non-Gaussian noise which is additional to the Gaussian thermal noise. This time jitter results in a degradation of the performance and may specifically result in increased data error rates.

Thus, a critical parameter when designing UWB systems is the accuracy of the locally generated clocks to which the data pulses are synchronised. In order to achieve a high data rate, increasingly shorter data pulses are used and this makes it increasingly important that the locally generated clock of the receiver is tightly synchronised to the clock of the transmitter. This not only puts stringent requirements on the synchronisation algorithms but also leads to very strict requirements for the transmit and receive oscillators which must have extremely high stability and low phase noise. Such requirements lead to critical oscillator designs and typically necessitate high complexity and/or the use of extremely high quality components. This leads to a significantly increased cost of the oscillators and prevents or complicates integrated designs. Typically the oscillators account for around 50% of the cost of a UWB receiver or transmitter.

Receive oscillators are conventionally synchronised to the data clocks of the received UWB signal (and thus the transmit oscillators) using known synchronisation techniques such as early-late correlators. Although this time synchronisation may compensate for some of the time jitter of the received signal or the local oscillator, the requirement for an accurate clock requires very low synchronisation bandwidths which does not allow tracking of most of the time jitter. Furthermore, the timing error detectors such as the early late correlators cannot practically generate timing error estimates sufficiently accurate for the extremely short duration data pulses of UWB signals and accordingly only coarse compensation of the time jitter is practical. Therefore, current UWB communication system design is limited and/or complicated by the oscillator accuracies and timing jitter thereby leading to reduced performance and/or costly, complex and/or large oscillators and thus communication units.

Hence, an improved system for UWB communication would be advantageous and in particular a system allowing for improved performance and/or improved synchronisation and/or improved, smaller and/or cheaper UWB receivers and/or transmitters and/or facilitated oscillator design would be advantageous.

### Summary of the Invention

Accordingly, the Invention seeks to preferably mitigate, alleviate or eliminate one or more of the above mentioned disadvantages singly or in any combination.

According to a first aspect of the invention there is provided a receiver for receiving an Ultra Wide Band (UWB) signal; the receiver comprising: means for receiving the UWB signal; a first plurality of correlators for generating correlated signal values around a first symbol decision point of a first symbol by correlating the received UWB signal with a local replica; the first plurality of correlators being time offset with respect to each other to generate first time offset correlated signal values; and means for determining a symbol value of the first symbol in response to the first time offset correlated signal values by joint detection of the symbol value and a time offset of the UWB signal.

The time offset of the UWB signal may be a time offset between a data clock of the received UWB signal and a receiver data clock. In most embodiments, the time offset of the UWB signal corresponds to a time offset between an oscillator of the transmitter of the UWB signal and an oscillator of the receiver. The time offset of the UWB signal may specifically correspond to the time jitter of the receive clock oscillator relative to the transmit oscillator. The joint detection assumes that the symbol value and time offset are unknown and interrelated. Thus, the time offset is estimated taking into account the symbol values and the symbol values are estimated taking into account the time offset. The local replica may be a local pulse determined from the transmit pulse. The local replica may take into account expected variations and/or distortions of the transmitted signal. For example, the local replica may include an expected distortion of the transmitted pulse.

The invention may allow for an improved performance when receiving a UWB signal. In particular an improved insensitivity to timing jitter and/or a reduced data error rate may be achieved. Additionally or alternatively requirements for synchronisation functionality may be relaxed. Specifically, the receiver and/or the transmitter oscillator may be relaxed. The transmitter and/or receiver design may be facilitated and/or cost and/or size and/or complexity may be reduced. The invention may in particular in some embodiments facilitate small form factor highly integrated UWB receivers and/or transmitters suitable for example for WPAN systems.

According to an optional feature of the invention, a time offset between a first correlator and a second correlator of the first plurality of correlators is less than a maximum time jitter of a symbol clock generator.

The symbol clock generator may be an oscillator of the receiver or of a transmitter generating the UWB signal. The feature may allow increased accuracy of timing estimation and/or resolution in the receiver and may provide improved performance and/or relaxed requirements for transmit and/or receive oscillators.

According to an optional feature of the invention, a time offset between a first correlator and a second correlator of the first plurality of correlators is less than a tenth of a symbol time. The feature may allow increased accuracy of timing estimation and/or resolution in the receiver and may provide improved performance and/or relaxed requirements for transmit and/or receive oscillators.

According to an optional feature of the invention, all time offsets between the first plurality of correlators are less than a symbol time. The feature may allow increased accuracy of timing estimation and/or resolution in the receiver and may provide improved performance and/or relaxed requirements for transmit and/or receive oscillators.

According to an optional feature of the invention, the first plurality of correlators is operable to generate time offset signal values around a plurality of symbol decision points of a plurality of symbols and the means for determining is operable to determine symbol values for the plurality of symbols by joint evaluation of the time offset correlated signal values corresponding to the plurality of symbol decision points. This may provide for increased performance and/or relaxed requirements for transmit and/or receive oscillators. In many embodiments, time offsets are correlated between a plurality of symbols and this correlation may be used in improving estimation of the time offset.

According to an optional feature of the invention, the means for determining is operable to determine the symbol values by averaging the time offset of the UWB signal over the plurality of symbols. In many embodiments, the average time offset is slowly moving and may be considered substantially constant for a plurality of symbols. Averaging the time offset of the UWB signal provides for a low complexity and high performance way of exploiting correlation between the time offsets for a plurality of symbols. The time offset may be averaged by averaging values associated with the signal values and determining a time instant associated with the averaged value. Specifically, the distance between the received correlations and the expected ones may be averaged.

According to an optional feature of the invention, the means for determining is operable to determine a symbol value by maximum likelihood detection. The feature may allow increased accuracy of symbol value determination and may provide improved performance and/or relaxed requirements for transmit and/or receive oscillators.

According to an optional feature of the invention, the receiver further comprises: a second plurality of correlators for generating correlated signal values around a second symbol decision point by correlating the received UWB signal with a local replica; the second plurality of correlators being time offset with respect to each other to generate second time offset correlated signal values; and the means for determining the symbol value is further operable to determine the symbol value in response to the second time offset correlated signal values.

The correlators of the first and/or second plurality of correlators may be serially implemented, implemented in parallel or a combination thereof. For example, the plurality of correlators may be implemented as discrete individual hardware entities or may e.g. be implemented by a firmware program calling the same correlator subroutine multiple times.

The UWB signal may in particular be a Pulse Position Modulated (PPM) signal. The first symbol decision point corresponds to a symbol decision point associated with a first symbol value of the first symbol and the second decision point corresponds to a decision point associated with a second symbol value of the first symbol.

The feature may provide improved performance and/or relaxed requirements for transmit and/or receive oscillators and/or relaxed requirements for synchronisation functionality design. In particular, an improved receiver for a PPM UWB signal may be provided by the invention.

According to an optional feature of the invention, each correlator of the first plurality of correlators having a relative time offset with respect to the first decision point has a corresponding correlator of the second plurality of correlators with substantially the same relative time offset with respect to the second decision point. This may facilitate implementation and design and/or may provide improved performance.

According to an optional feature of the invention, the means for determining is operable to determine the first symbol value by substantially minimising a difference indication between the first and second correlated signal values and expected values of the first and second correlated signal values associated with the first symbol value. This may facilitate implementation and design and/or may provide improved performance.

According to an optional feature of the invention, the means for determining is operable to determine the first symbol value by maximum likelihood detection. This may allow for a practical implementation with high performance.

According to an optional feature of the invention, the means for determining comprises: means for determining a time offset symbol value for a plurality of time offsets in response to the first and second time offset correlated signal values; means for determining a likely time offset in response to the time offset symbol values and the first and second time offset correlated signal values; and means for determining the first symbol value as the time offset symbol value corresponding to the likely time offset.

This may facilitate implementation and/or design and/or may provide improved performance and/or relaxed requirements for oscillators and/or may improve synchronisation.

According to an optional feature of the invention, the means for determining the time offset symbol values comprises:

means for selecting a subset of the first and second time offset correlated signal values for each of the plurality of time offsets, and means for determining the time offset symbol value for each time offset in response to the subset of each time offset.

This feature may further facilitate implementation and design and/or may provide improved performance.

According to an optional feature of the invention, the means for determining comprises: means for determining an estimated time offset of the UWB signal; and means for adjusting the time offset of the first plurality of correlators in response to the estimated time offset of the UWB signal.

This may facilitate implementation and design and/or may provide improved performance. In particular, an adaptive adjustment of the time offsets of the first plurality of correlators may be implemented resulting in a possibly improved performance or reduced complexity as fewer correlators may be necessary.

The UWB signal may in particular be a Pulse Position Modulation (PPM) UWB signal or a Pulse Amplitude Modulation (PAM) UWB signal.

According to a second aspect of the invention, there is provided a method of receiving an Ultra Wide Band (UWB) signal; the method comprising the steps of: receiving the UWB signal; generating, by use of a first plurality of correlators, correlated signal values around a first symbol decision point of a first symbol by correlating the received UWB signal with a local replica; the first plurality of correlators being time offset with respect to each other to generate first time offset correlated signal values; and determining a symbol value of the first symbol in response to the first time offset correlated signal values by joint detection of the symbol value and a time offset of the UWB signal.

These and other aspects, features and advantages of the invention will be apparent from and elucidated with reference to the embodiment(s) described hereinafter.

**Brief Description of the Drawings**

An embodiment of the invention will be described, by way of example only, with reference to the drawings, in which

FIG. 1 illustrates a system 100 for communicating a UWB signal in accordance with an embodiment of the invention;

FIG. 2 illustrates an example of a transmit format for a UWB signal;

FIG. 3 illustrates an example of a correlator suitable for an embodiment of the invention; and

FIG. 4 illustrates correlated signal values generated by an UWB receiver in accordance with an embodiment of the invention.

**Detailed Description of a Preferred Embodiment of the Invention**

The following description focuses on an embodiment of the invention applicable to a Pulse Position Modulation (PPM) Ultra Wide Band (UWB) signal. However, it will be appreciated that the invention is not limited to this application but may be applied to many other UWB signals including for example Pulse Amplitude Modulated (PAM) UWB signals or combined PAM and PPM signals.

The description will for clarity and brevity furthermore focus on binary PPM-UWB. However, the described principles are readily extended to e.g. m-ary PPM-UWB signals or to any kind of PAM/PPM-UWB signals.

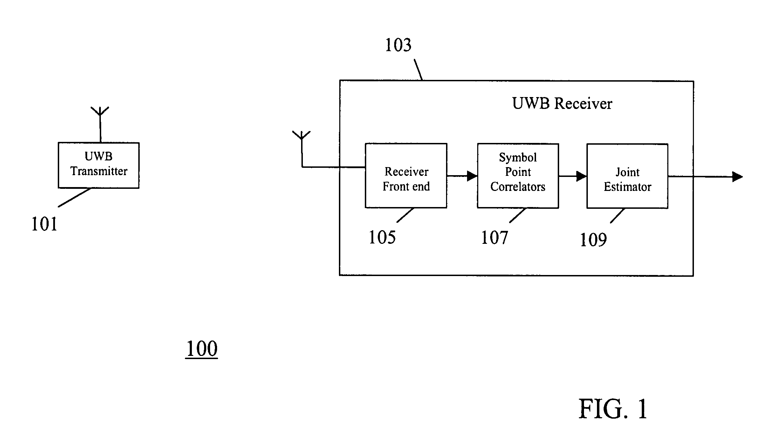

FIG. 1 illustrates a system 100 for communicating a UWB signal in accordance with an embodiment of the invention.

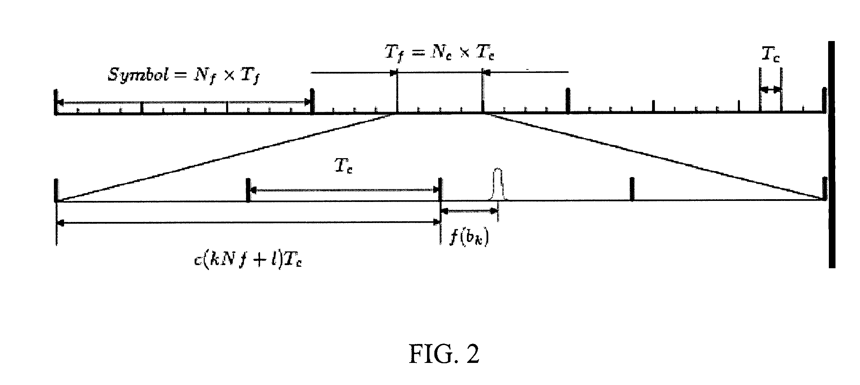

The system 100 comprises a UWB transmitter 101 which in the embodiment generates a UWB signal in accordance with the technical specifications of IEEE802.15.3a and/or IEEE802.15.4a. The format of the transmitted signal is illustrated in FIG. 2. As is well known to the person skilled in the art, each symbol is transmitted on $N_s$ frames of duration $T_f$. In each frame, the symbol maps the position of a pulse within a chip of duration $T_c$. Time hopping is used so that the chip position changes at each frame in order to smooth the spectrum. In the embodiment of FIG. 1, a PPM UWB data signal is thus used such that the value of the duration $t=f(b_k)$ represents the data symbol value $b_k$.

As known to the person skilled in the art, for m-ary PAM-UWB systems, the symbol data value is represented by the amplitude of the pulse instead of its position (the delay relative to the start of the chip). In combined PAM-PPM-UWB systems, some of the bits of the transmitted symbols are represented by the pulse position and the remaining bits are represented by the pulse amplitude.

For brevity and clarity the description will henceforth focus on an embodiment without data repetition such that each bit is transmitted only once. However, it will readily be appreciated that the described principles may equally be applied to transmission using repetition of transmitted data symbols. In a simple embodiment, each repetition may be individually received as described in the following and the resulting data bit may determined by a majority decision.

The system 100 of FIG. 1 further comprises a UWB receiver 103. In a conventional PPM UWB receiver, the data symbol value is typically determined by correlating the receiver signal with delayed versions of the expected pulse. Each delayed version (typically called a template or a local replica) corresponds to the time instant for a given data symbol value. Thus, in the binary case, a first correlator performs a correlation around the pulse decision time for a pulse having a timing corresponding to a zero data value and a second correlator performs a correlation around the pulse decision time for a pulse having a timing corresponding to a one data value. The data value may then be determined as the data value for the correlator having the largest correlation value.

This approach assumes that one correlator is positioned at the correct decision time instant for the different data values. Accordingly, conventional UWB receivers comprise time offset estimators such as early late gates which are used to synchronise the receiver oscillator to the incoming UWB signal. However, such a synchronisation is very difficult due to the short pulse durations and tends to only allow a coarse synchronisation. Furthermore, in order to get accurate synchronisation, the bandwidth of the synchronisation must be very low thereby hindering the effective tracking of non-DC time offsets. Accordingly, the requirements for stability and phase noise of the oscillators are typically extremely strict resulting in expensive and large oscillators.

More specifically, in the binary PPM case, the conventional UWB receiver contains two correlators, one for the 0 position and one for the 1 position. In an AWGN channel, assuming a zero jitter, the two correlations $C_0$ and $C_1$ generated by the correlators for the positions corresponding to the data values 0 and 1 respectively may be expressed by:

$$\begin{bmatrix} C_0 \\ C_1 \end{bmatrix} = \begin{bmatrix} S_w(b\Delta) \\ S_w((1-b)\Delta) \end{bmatrix} + \begin{bmatrix} \eta_0 \\ \eta_1 \end{bmatrix} \qquad (1)$$

where $S_w$ is the autocorrelation function of the transmitted pulse w (i.e. it represents the noise free ideal correlation), A is the delay between the position of symbol value 0 and the position of symbol value 1, and b is the transmitted bit. The transmitted bit b (0 or 1) can then be retrieved using for example the Maximum Likelihood criteria or may simply be selected as the data symbol of the correlator having the highest correlation value.

Considering a time jitter J, which is assumed constant over several frames, Eq. (1) may be modified to:

$$\begin{bmatrix} C_0 \\ C_1 \end{bmatrix} = \begin{bmatrix} S_w(b\Delta + J) \\ S_w((1-b)\Delta - J) \end{bmatrix} + \begin{bmatrix} \eta_0 \\ \eta_1 \end{bmatrix}$$

$$(2)$$

which, assuming that the jitter is small compared to $\Delta$ (and that $\Delta$ is an extremum of the $S_w$), can be rewritten as:

$$\begin{bmatrix} C_0 \\ C_1 \end{bmatrix} = \begin{bmatrix} S_w(b\Delta) \\ S_w((1-b)\Delta) \end{bmatrix} + \frac{J^2}{2}\begin{bmatrix} \partial^2 S_w(b\Delta) \\ \partial^2 S_w((1-b)\Delta) \end{bmatrix} + \begin{bmatrix} \eta_0 \\ \eta_1 \end{bmatrix} \qquad (3)$$

Eq. (3) illustrates that the jitter effect is an additional noise. However, this noise is neither Gaussian nor centred. Therefore, determining its distribution in order to apply the Maximum Likelihood criterion and to retrieve the transmitted bits is impractical. Accordingly, it is clear that the unavoidable time jitter causes significant performance degradation in a conventional UWB receiver.

Furthermore, in a conventional receiver, the timing estimation of the incoming signal is derived directly from the incoming signal and only used to align the correlators to the received signal. Furthermore, the data symbol values are determined assuming ideal synchronisation and this determination is thus performed independently of the timing estimation. Due to the imperfections of the timing synchronisation and the oscillators, this results in significant performance degradation.

The UWB receiver 103 of the current embodiment comprises a receiver front end 105 which receives, amplifies and filters the UWB signal.

The receiver front end 105 is coupled to a bank of symbol point correlators 107. The symbol point correlators 107 comprise plurality of correlators for generating correlated signal values around a first symbol decision point of a first symbol by correlating the received UWB signal with a local replica. The first symbol decision point is in the embodiment of FIG. 1 the symbol decision point of a data value of 0. The correlators of the plurality of correlators are time offset with respect to each other and each correlator generates a correlated signal value.

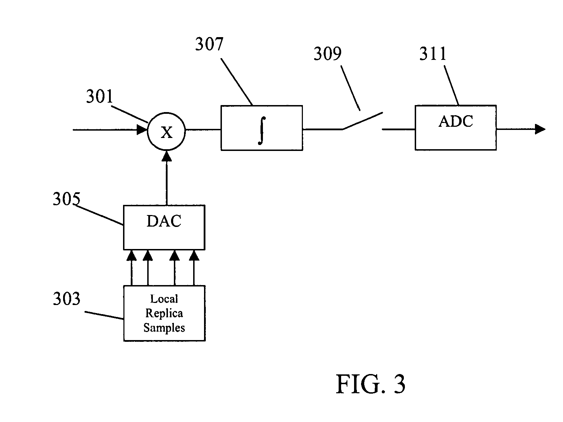

FIG. 3 illustrates an example of a correlator of the symbol point correlators 107. The correlator comprises an analog multiplier 301 which multiplies the received signal by a time offset local replica of the pulse. The local replica corresponds to a noise free pulse received at the given time offset. The local replica is generated by extracting local replica samples from a memory 303 and feeding these to a Digital to Analog Controller (DAC) 305 for conversion to the analog domain. The analog local replica is then fed to the analog multiplier 301 where it is multiplied by the incoming signal. The multiplication result is integrated in an analog integrator 307. The integrated value is sampled 309 and fed to an Analog to Digital Converter (ADC) 311 which generates the digitized correlation value of the correlator.

In the embodiment of FIG. 1, the symbol point correlators 107 comprise a plurality of discrete hardware implemented correlators as illustrated in FIG. 3. Each of the correlators has a different time offset. As a particular example, the symbol point correlators 107 may comprise three correlators. One correlator determines a correlation value assuming ideal synchronisation (i.e. this correlator may be considered to have a time offset substantially corresponding to the expected symbol decision point). Each of the other two correlators have a time offset which is slightly lower or higher than the time offset of the first correlator. For example, the relative offset between the correlators may be, say, 5-10% of the difference A between a 0 symbol value and a 1 symbol value.

Denoting the relative time offset between the correlators $\delta$, the symbol point correlators 107 may in the specific example generate the three correlation values given by:

$$\begin{bmatrix} C_{-\delta,0} \\ C_{0,0} \\ C_{\delta,0} \end{bmatrix} = \begin{bmatrix} \int_T r(t) \cdot p(t+\partial)dt \\ \int_T r(t) \cdot p(t)dt \\ \int_T r(t) \cdot p(t-\partial)dt \end{bmatrix} \qquad (4)$$

where r(t) is the received signal, p(t) is the locally stored replica and T is a suitable time interval around the symbol decision point for a 0 data value.

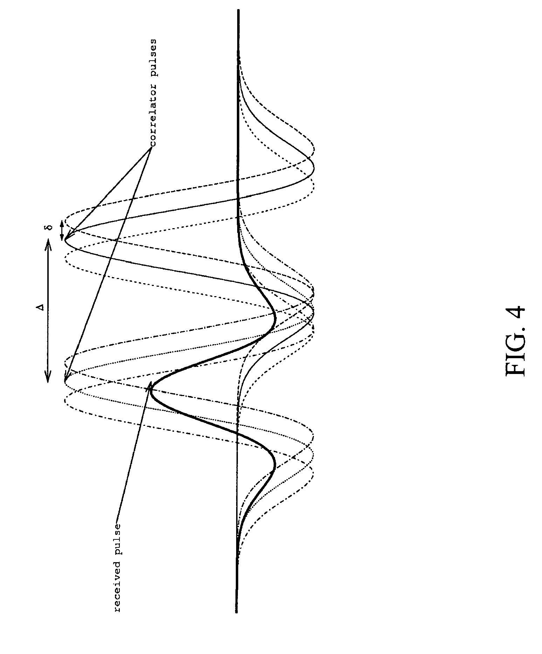

FIG. 4 illustrates the correlated signal values generated by the three correlators in the specific example.

Hence, in contrast to conventional receivers, the UWB receiver 103 of the embodiment of FIG. 1 generates a plurality of correlation values for each symbol decision point. In the specific example, a correlation value is generated for the estimated correct symbol decision point, one is generated slightly before and one is generated slightly after. Hence, additional information is generated and in particular additional information associated with small timing variations around a symbol decision point is generated.

The symbol point correlators 107 are coupled to a joint estimator 109 which determines a symbol value of the first symbol in response to the time offset correlated signal values generated by the symbol point correlators 107. In particular the joint estimator 109 determines the symbol value by joint detection of the symbol value and a time offset of the UWB signal.

The joint estimator 109 may in particular determine the symbol data value by a maximum likelihood detection based on the unknown variables of the time offset and the symbol data value.

Hence, in accordance with the embodiment of FIG. 1, the symbol value is determined by generating additional correlation values corresponding to small time offsets between the data clock of the received signal and that of the receiver. The additional values are used to perform a joint detection of the time offset and the data value. Hence, improved performance and reduced sensitivity to timing jitter is achieved. Accordingly, the requirements for the oscillators of the UWB receiver and/or transmitter may be relaxed leading to reduced complexity and cost.

In some embodiments, the UWB receiver may generate time offset correlated values around a single symbol decision point and determine the data value associated with this symbol decision point independently of other symbol decision points. This may for example be suitable for many PAM UWB signals.

However, in other embodiments, correlation values are generated for a plurality of symbol decision points and the symbol values are determined by considering these together. For example, for PPM UWB signals, correlation values are preferably generated for all symbol decision points associated with a possible data value.

For a binary PPM UWB signal, the symbol point correlators 107 accordingly preferably comprises a second plurality of correlators for generating correlated signal values around a second symbol decision point by correlating the received UWB signal with a local replica. The second symbol decision point may in the specific example of FIG. 1 correspond to the symbol decision point associated with a symbol value of 1. The joint estimator 109 may then determine the symbol value of the data symbol taking into account both the time offset correlated values around the symbol decision point associated with a symbol value of 0 and the time offset correlated values around the symbol decision point associated with a symbol value of 1.

In many embodiments, the correlators for the first and second symbol decision point may have the same relative time offsets. In particular, each correlator of one symbol decision point may have a relative time offset with respect to this decision point and a corresponding correlator of a second decision point may have the same relative time offset with respect to the second decision point. This may facilitate processing in the joint estimator 109 and may allow a reduced complexity of the UWB receiver. Specifically, the correlators for the different symbol decision points may be implemented by the same bank of correlators.

In the following, an embodiment of the UWB receiver for a binary PPM UWB signal wherein correlation values are generated for both possible data values is described in more detail.

Using the same connotation as previously and setting the number of correlation values generated for each symbol decision point to 2·N+1, the generated correlation values may be expressed by:

$$
\begin{bmatrix} C_{-N,0} \\ \vdots \\ C_{N,0} \\ C_{-N,1} \\ \vdots \\ C_{N,1} \end{bmatrix} = \begin{bmatrix} S_w(b\Delta + J - N\delta) \\ \vdots \\ S_w(b\Delta + J + N\delta) \\ S_w((1-b)\Delta - J + N\delta) \\ \vdots \\ S_w((1-b)\Delta - J - N\delta) \end{bmatrix} + \underline{\eta} \qquad (5)
$$

The timing jitter J can be expressed as the sum of an integer number of $\delta$ and a residual part $J_r$:

$$J = k\delta + J_r, \text{ with } k = \left\lfloor \frac{J}{\delta} \right\rfloor \tag{6}$$

Inserting Eq. (6) into Eq. (5) yields:

$$\tag{7}$$

$$\begin{bmatrix} C_{-N,0} \\ \vdots \\ C_{N,0} \\ C_{-N,1} \\ \vdots \\ C_{N,1} \end{bmatrix} = \begin{bmatrix} S_w(b\Delta + k\delta + J_r - N\delta) \\ \vdots \\ S_w(b\Delta + k\delta + J_r + N\delta) \\ S_w((1-b)\Delta - k\delta - J_r + N\delta) \\ \vdots \\ S_w((1-b)\Delta - k\delta - J_r - N\delta) \end{bmatrix} + \underline{\eta}$$

Assuming that the remaining jitter $\underline{J}_r$ is small compared to $\Delta$ these correlation values may be approximated by:

$$\tag{8}$$

$$\underbrace{\begin{bmatrix} C_{-N,0} \\ \vdots \\ C_{N,0} \\ C_{-N,1} \\ \vdots \\ C_{N,1} \end{bmatrix}}_{\underline{C}} = \underbrace{\begin{bmatrix} S_w(b\Delta + k\delta - N\delta) \\ \vdots \\ S_w(b\Delta + k\delta + N\delta) \\ S_w((1-b)\Delta - k\delta + N\delta) \\ \vdots \\ S_w((1-b)\Delta - k\delta - N\delta) \end{bmatrix}}_{\underline{S}_{w,N}(b\Delta + k\delta)} + J_r \underbrace{\begin{bmatrix} \partial S_w(b\Delta + k\delta - N\delta) \\ \vdots \\ \partial S_w(b\Delta + k\delta + N\delta) \\ \partial S_w((1-b)\Delta - k\delta + N\delta) \\ \vdots \\ \partial S_w((1-b)\Delta - k\delta - N\delta) \end{bmatrix}}_{\partial \underline{S}_{w,N}(b\Delta + k\delta)} + \frac{J_r^2}{2} \underbrace{\begin{bmatrix} \partial^2 S_w(b\Delta + k\delta - N\delta) \\ \vdots \\ \partial^2 S_w(b\Delta + k\delta + N\delta) \\ \partial^2 S_w((1-b)\Delta - k\delta + N\delta) \\ \vdots \\ \partial^2 S_w((1-b)\Delta - k\delta - N\delta) \end{bmatrix}}_{\partial^2 \underline{S}_{w,N}(b\Delta + k\delta)} + \underline{\eta}$$

The term $J_r \partial \underline{S}_{w,N}(b\Delta + k\delta) + \dfrac{J_r^2}{2} \partial^2 \underline{S}_{w,N}(b\Delta + k\delta)$ is still a non Gaussian noise but due to the increased number of correlators it is significantly reduced and will for a sufficiently high value of N be negligible compared to the thermal noise $\underline{\eta}$. Accordingly the overall noise contribution to the correlation values may be considered Gaussian. Consequently, Maximum Likelihood criteria may be applied to determine the time offset k and the symbol value b.

In particular, the joint estimator 109 may determine the symbol value by substantially minimising a difference indication between the correlated signal values C and the expected values of the correlated signal values $S_{w,N}$.

A suitable criterion consists in determining:

$$\left[ \hat{b}, \hat{k} \right] = \arg\min_{b,k} \left( \left( \underline{C} - \underline{S}_{w,N}(b\Delta + k\delta) \right)^H \mathbf{R}_N^{-1} \left( \underline{C} - \underline{S}_{w,N}(b\Delta + k\delta) \right) \right) \tag{9}$$

where $\mathbf{R}_N^{-1}$ denotes the autocorrelation matrix of the noise. Thus, the criterion may be considered to correspond to a minimisation of the square difference between the actually generated correlation values and the noise free ideal correlation values.

A suitable algorithm for evaluating this criterion comprises initially determining a time offset symbol value for each time offset k in response to the first and second time offset correlated signal values. This may be implemented by the pseudo code:

- For each $k \in \{-N,...,0,...,N\}$, compute the Maximum Likelihood solution $\hat{b}_k$:

$$\hat{b}_k = \arg\min_b \left( \left( \underline{C} - \underline{S}_{w,N}(b\Delta + k\delta) \right)^H \mathbf{R}_N^{-1} \left( \underline{C} - \underline{S}_{w,N}(b\Delta + k\delta) \right) \right)$$

Hence, for each time offset corresponding to a time offset of a correlator of the symbol point correlators 107, the most likely data symbol value is determined.

Subsequently, the joint estimator 109 may determine a likely time offset in response to the time offset symbol values generated in the previous step and the correlated signal values. This may be implemented by the pseudo code:

- Compute

$$\hat{k} = \arg\min_k \left( \left( \underline{C} - \underline{S}_{w,N}(\hat{b}_k\Delta + k\delta) \right)^H \mathbf{R}_N^{-1} \left( \underline{C} - \underline{S}_{w,N}(\hat{b}_k\Delta + k\delta) \right) \right)$$

Hence, the most likely time offset considering the likely symbol values generated in the previous step is determined.

Finally, the joint estimator 109 may determine the symbol value as the time offset symbol value generated in the first step for the most likely time offset determined in the second step. This may be implemented by the simple pseudo code:

- The estimated bit is $\hat{b} = \hat{b}_{\hat{k}}$

Hence, an effective determination of the symbol value by jointly determining a time offset and a symbol value is achieved.

It will be appreciated that an increased number of correlators may provide an increased accuracy of the estimation as the time offset between correlators may be reduced. In most embodiments, the time offset between correlators is less than a maximum time jitter of a symbol clock generator, such as the oscillator of the transmitter and/or receiver. This may provide for a timing accuracy of the receive algorithm which exceeds the timing accuracy of the symbol clock generator.

In many embodiments it will be suitable for the time offset between the correlators to be less than a tenth of a symbol time as this accuracy will result in relatively high timing accuracy resulting in suitable receiver performance. Likewise, all time offsets between the correlators for one symbol decision point may in most embodiments be less than a symbol time.

A further performance increase may in some embodiments be achieved by extending the joint detection over a plurality of data symbols. In particular, time jitter is frequently varying very slowly compared to the frame duration and may accordingly be considered substantially constant for a number of data symbols.

In some such embodiments, the symbol point correlators 107 may generate time offset signal values around a plurality of symbol decision points of a plurality of symbols and the joint estimator 109 may determine symbol values for the plurality of symbols by joint evaluation of the correlated values for the plurality of symbols. In particular, the time offset may be averaged over a number M of data symbols by assuming that the time jitter is constant for these M data symbols and determining the M symbol values by determining:

$$\left[ \hat{b}_1, \hat{b}_2, \cdots, \hat{b}_M, \hat{k} \right] = \arg\min_{b_1,\cdots,b_M,k} \left( \sum_{i=1}^{M} \left( \left( \underline{C}(i) - \underline{S}_{w,N}(b_i\Delta + k\delta) \right)^H \mathbf{R}_N^{-1} \left( \underline{C}(i) - \underline{S}_{w,N}(b_i\Delta + k\delta) \right) \right) \right)$$

$$(10)$$

A suitable algorithm may be achieved by implementing the following specific steps:

- For each $k \in \{-N,...,0,...,N\}$ and each $i \in \{1,...,M\}$, compute the Maximum Likelihood solution $\hat{b}_{k,i}$:

$$\hat{b}_{k,i} = \arg\min_{b_i}\left(\left(\underline{C}(i) - \underline{S}_{w,N}(b_i\Delta + k\delta)\right)^H \mathbf{R}_N^{-1}\left(\underline{C}(i) - \underline{S}_{w,N}(b_i\Delta + k\delta)\right)\right)$$

where $\underline{C}(i)$ is the correlation vector $\underline{C}$ for the *i*-th data symbol.

- Compute

$$\hat{k} = \arg\min_{k}\left(\sum_{i=1}^{M}\left(\left(\underline{C}(i) - \underline{S}_{w,N}(\hat{b}_{k,i}\Delta + k\delta)\right)^H \mathbf{R}_N^{-1}\left(\underline{C}(i) - \underline{S}_{w,N}(\hat{b}_{k,i}\Delta + k\delta)\right)\right)\right)$$

- The estimated bit sequence is

$$\left[\hat{b}_1,\cdots,\hat{b}_M\right] = \left[\hat{b}_{\hat{k},1},\cdots,\hat{b}_{\hat{k},1}\right]$$

The described algorithms may be computationally demanding in some applications. Accordingly, it may in some embodiments be advantageous to reduce the computational requirement. In some such embodiments, the joint estimator 109 may select a subset of the correlated signal values for each of the time offsets when determining the most likely symbol value for each time offset.

For example, the previously described algorithms may be simplified by only considering two correlated signal values for each possible time offset. Thus, in this embodiment, for each $k \in \{-N,...,0,...,N\}$, only two lines of the $\underline{C}$ *(i)* vector are evaluated:

$$\underline{C}_k(i) = \begin{bmatrix} C_{-k,0}(i) \\ C_{-k,1}(i) \end{bmatrix} = \begin{bmatrix} S_w(b_i\Delta + J - k\delta) \\ S_w((1-b_i)\Delta - J + k\delta) \end{bmatrix} + \begin{bmatrix} \eta_0 \\ \eta_1 \end{bmatrix} = \begin{bmatrix} S_w(b_i\Delta + J_r) \\ S_w((1-b_i)\Delta - J_r) \end{bmatrix} + \begin{bmatrix} \eta_0 \\ \eta_1 \end{bmatrix}$$

$$(11)$$

which may be re-written as:

$$\underline{C}_k(i) = \underbrace{\begin{bmatrix} S_w(b_i\Delta + (n-k)\delta) \\ S_w((1-b_i)\Delta + (k-n)\delta) \end{bmatrix}}_{\underline{S}_{w,2}(b_i\Delta)} + J_r\begin{bmatrix} \partial\, S_w(b_i\Delta + (n-k)\delta) \\ \partial\, S_w((1-b_i)\Delta + (k-n)\delta) \end{bmatrix} + \frac{J_r^2}{2}\begin{bmatrix} \partial^2 S_w(b_i\Delta + (n-k)\delta) \\ \partial^2 S_w((1-b_i)\Delta + (k-n)\delta) \end{bmatrix} + \begin{bmatrix} \eta_0 \\ \eta_1 \end{bmatrix}$$

$$(12)$$

where $n = \left\lfloor \dfrac{J}{\delta} \right\rfloor$

The low-complexity version of the algorithm may then be expressed by the individual steps:

- For each $k \in \{-N,...,0,...,N\}$ and each $i \in \{1,...,M\}$, compute the Maximum Likelihood solution $\hat{b}_{k,i}$:

$$\hat{b}_{k,i} = \arg\min_{b_i}\left(\left(\underline{C}_k(i) - \underline{S}_{w,2}(b_i\Delta)\right)^H \mathbf{R}_2^{-1}\left(\underline{C}_k(i) - \underline{S}_{w,2}(b_i\Delta)\right)\right)$$

- Compute

$$\hat{k} = \arg\min_k\left(\sum_{i=1}^{M}\left(\left(\underline{C}_k(i) - \underline{S}_{w,2}(\hat{b}_{k,i}\Delta)\right)^H \mathbf{R}_2^{-1}\left(\underline{C}_k(i) - \underline{S}_{w,2}(\hat{b}_{k,i}\Delta)\right)\right)\right)$$

- The estimated bit sequence is determined as

$$\left[\hat{b}_1,\cdots,\hat{b}_M\right] = \left[\hat{b}_{\hat{k},1},\cdots,\hat{b}_{\hat{k},1}\right]$$

In some embodiments it may be advantageous to adaptively determine an estimated time offset of the UWB signal and to dynamically adjust the time offset of the correlators of the symbol point correlators 107 in response to the estimated time offset of the UWB signal. This may for example be used to reduce the number of correlators and correlation values for each symbol decision point.

For example, an estimated jitter value may be used to calculate the best time shift that has to be applied to the correlator during the next group of M symbols. It has been found that when correlating by a large number of correlators, only few correlation values are typically significant and contribute effectively to the estimation of the jitter value. Therefore by dynamically adjusting the time shift of the correlators, it is possible to ensure that only useful correlation values are generated and used by the joint estimator 109.

Hence, in accordance with some embodiments of the invention, techniques for addressing synchronization problems in pulse based UWB systems and in particular time jitter originating from oscillators phase noise has been provided.

The techniques may apply to a correlation based demodulator where the demodulator correlates the received signal with several local pulses (which may also be referred to as local replicas). These pulses may be organized as follows:

Main pulses: these pulses correspond to decision points of the demodulator and practically they correspond to the position of the expected pulses. They are spaced by relatively important time shift.

Extra-pulses: behind every main pulse, some pulses spaced by small time shift are added.

The received symbols consists in a set of values corresponding to the cross correlation between the received signal and the local pulses.

The techniques may jointly estimate data and the time shift affecting the signal for several consequent symbols. Thanks to the slow varying property of the time jitter compared to the data rate, this allows averaging of the uncertainty of the timing of the received signal. Accurate timing reduces the error probability.

Some possible techniques are

1) Full Maximum Likelihood detection algorithm:
This technique consists in jointly estimating the data and the time shift by applying a full maximum-likelihood detection to all the received correlations corresponding to several consequent symbols. In this technique, a distance calculation (between the received correlations and the expected ones) involves all the correlations at the same time.

2) Sub-optimum detection algorithm:
Rather than calculating distances using all correlation points, the correlation values are grouped by pairs (or more triplet, quadruple ... ) and compared to the jitter-less ideal ones. The distance is averaged over several data symbols in order to obtain the advantage of the coloration (or slow variation) of the time jitter.

3) Adaptive version for any one of the previous technique:
The techniques described above can be combined with an adaptation algorithm which consists in reducing the number of correlations to capture only the main ones. As these techniques estimate the time shift (or jitter) that affects the received signal, this information is used to process the useful correlations only.

The invention can be implemented in any suitable form including hardware, software, firmware or any combination of these. However, preferably, the invention is implemented partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

**Claims**

1.  A receiver for receiving an Ultra Wide Band (UWB) signal; the receiver comprising:

    means for receiving the UWB signal;
    a first plurality of correlators for generating correlated signal values around a first symbol decision point of a first symbol by correlating the received UWB signal with a local replica; the first plurality of correlators being time offset with respect to each other to generate first time offset correlated signal values; and
    means for determining a symbol value of the first symbol in response to the first time offset correlated signal values by joint detection of the symbol value and a time offset of the UWB signal.

2.  A receiver as claimed in claim 1 wherein a time offset between a first correlator and a second correlator of the first plurality of correlators is less than a maximum time jitter of a symbol clock generator.

3.  A receiver as claimed in claim 1 or 2 wherein a time offset between a first correlator and a second correlator of the first plurality of correlators is less than a tenth of a symbol time.

4.  A receiver as claimed in any of the previous claims wherein all time offsets between the first plurality of correlators are less than a symbol time.

5.  A receiver as claimed in any of the previous claims wherein the first plurality of correlators is operable to generate time offset signal values around a plurality of symbol decision points of a plurality of symbols, and the means for determining is operable to determine symbol values for the plurality of symbols by joint evaluation of the time offset correlated signal values corresponding to the plurality of symbol decision points.

6.  A receiver as claimed in claim 5 wherein the means for determining is operable to determine the symbol values by averaging the time offset of the UWB signal over the plurality of symbols.

7.  A receiver as claimed in any of the previous claims wherein the means for determining is operable to determine a symbol value by maximum likelihood detection.

8.  A receiver as claimed in any of the previous claims further comprising:

    a second plurality of correlators for generating correlated signal values around a second symbol decision point by correlating the received UWB signal with a local replica; the second plurality of correlators being time offset with respect to each other to generate second time offset correlated signal values; and

wherein the means for determining the symbol value is further operable to determine the symbol value in response to the second time offset correlated signal values.

9.  A receiver as claimed in claim 8 wherein the first symbol decision point corresponds to a symbol decision point associated with a first symbol value of the first symbol and the second decision point corresponds to a decision point associated with a second symbol value of the first symbol.

10. A receiver as claimed in any of the previous claims 8 or 9 wherein each correlator of the first plurality of correlators having a relative time offset with respect to the first decision point has a corresponding correlator of the second plurality of correlators with substantially the same relative time offset with respect to the second decision point.

11. A receiver as claimed in any of the previous claims 8 to 10 wherein the means for determining is operable to determine the first symbol value by substantially minimising a difference indication between the first and second correlated signal values and expected values of the first and second correlated signal values associated with the first symbol value.

12. A receiver as claimed in any of the previous claims 8 to 11 wherein the means for determining is operable to determine the first symbol value by maximum likelihood detection.

13. A receiver as claimed in any of the previous claims 8 to 12 wherein the means for determining comprises:

means for determining a time offset symbol value for a plurality of time offsets in response to the first and second time offset correlated signal values;

means for determining a likely time offset in response to the time offset symbol values and the first and second time offset correlated signal values; and

means for determining the first symbol value as the time offset symbol value corresponding to the likely time offset.

14. A receiver as claimed in claim 13 wherein the means for determining the time offset symbol values comprises:

means for selecting a subset of the first and second time offset correlated signal values for each of the plurality of time offsets, and

means for determining the time offset symbol value for each time offset in response to the subset of each time offset.

15. A receiver as claimed in any of the previous claims wherein the means for determining comprises:

means for determining an estimated time offset of the UWB signal; and

means for adjusting the time offset of at least one of the first plurality of correlators in response to the estimated time offset of the UWB signal.

16. A receiver as claimed in any of the previous claims 8 to 15 wherein the means for determining comprises means for determining a joint time offset for a plurality of data values.

17. A receiver as claimed in any of the previous claims 8 to 16 wherein the means for determining comprises means for jointly determining a time offset and a plurality of data symbols using at least one decision point for each data symbol of the sequence of data symbols.

18. A receiver as claimed in any of the previous claims wherein the UWB signal is a Pulse Position Modulation (PPM) UWB signal.

19. A receiver as claimed in any of the previous claims wherein the UWB signal is a Pulse Amplitude Modulation (PAM UWB signal.

20. A method of receiving an Ultra Wide Band (UWB) signal; the method comprising the steps of:

receiving the UWB signal;

generating, by use of a first plurality of correlators correlated signal values around a first symbol decision point of a first symbol by correlating the received UWB signal with a local replica, the first plurality of correlators being time offset with respect to each other to generate first time offset correlated signal values; and
determining a symbol value of the first symbol in response to the first time offset correlated signal values by joint detection of the symbol value and a time offset of the UWB signal.

21. A computer program enabling the carrying out of a method according to claim 20.

22. A record carrier comprising a computer program as claimed in claim 21.

EP 1 633 057 A1

UWB Transmitter

101

103

UWB Receiver

Receiver Front end

Symbol Point Correlators

Joint Estimator

105

107

109

100

FIG. 1

FIG. 2

EP 1 633 057 A1

FIG. 3

FIG. 4

**European Patent Office**

## EUROPEAN SEARCH REPORT

Application Number

EP 04 29 2160

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/147480 A1 (RICHARDS JAMES L ET AL) 7 August 2003 (2003-08-07) * paragraphs [0185], [0190] - [0195], [0345]; figures 9,17 * ----- | 1-4,7, 18-22 | H04B1/69 |
| A | CHIA-HSIANG YANG ET AL: "Design of a low-complexity receiver for impulse-radio ultra-wideband communication systems" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages 125-128, XP010719752 ISBN: 0-7803-8251-X * paragraph [0003] * ----- | 1,20 | |

TECHNICAL FIELDS SEARCHED (Int.Cl.7)

H04B

The present search report has been drawn up for all claims

| Place of search | Date of completion of the search | Examiner |
|---|---|---|
| The Hague | 23 February 2005 | Amorotti, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 29 2160

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2005

| Patent document cited in search report | Publication date | Patent family member(s) | Publication date |
|---|---|---|---|
| US 2003147480 A1 | 07-08-2003 | US 6556621 B1<br>AU 5110001 A<br>EP 1269439 A2<br>JP 2003529257 T<br>WO 0173712 A2 | 29-04-2003<br>08-10-2001<br>02-01-2003<br>30-09-2003<br>04-10-2001 |

EPO FORM P0459

For more details about this annex : see Official Journal of the European Patent Office, No. 12/82